# EUROPÄISCHE PATENTANMELDUNG

(11) **EP 1 084 867 A1**
(43) Veröffentlichungstag der Anmeldung: **21.03.2001**
(21) Anmeldenummer: 99710008.6
(22) Anmeldetag: 13.09.1999
(51) Int. Cl.: B60B 11/10

(54) **Notlauf-System für ein Kraftfahrzeug**

(71) Anmelder: Janus, Jonny, D-40210 Düsseldorf (DE); Markewitz, Wolfgang, 40883 Ratingen (DE)
(72) Erfinder: Janus, Jonny, D-40210 Düsseldorf (DE); Markewitz, Wolfgang, 40883 Ratingen (DE)
(74) Vertreter: Gille Hrabal Struck Neidlein Prop Roos

(57) **Zusammenfassung**

Die Erfindung betrifft eine Notlaufeinrichtung für ein Fahrzeug mit einem radförmigen oder kreisscheibenförmigen Element sowie Mitteln, um das Element auf der Felge (1) eines Rades eines Fahrzeuges zu befestigen. Das radförmige oder kreisscheibenförmige Element besteht bevorzugt aus mehreren Teilen, insbesondere aus zwei halbkreisförmigen Elementen (10,11).

Es wird im Fall einer Reifenpanne außen auf die Felge (1) mit dem defekten Reifen montiert. Die Notlaufeinrichtung kann vorteilhaft klein und leicht sein.

## Beschreibung

Die Erfindung betrifft eine Notlaufeinrichtung mit den Merkmalen des Oberbegriffs für ein Fahrzeug mit aufgepumpten Reifen, die auf Felgen montiert sind. Dieses wird im Anschluß an einen starken Druckverlust in einem Reifen eingesetzt. Die Erfindung betrifft ferner zugehörige Felgen.

Zu den Störungen beim Betrieb eines Kraftfahrzeuges gehören Reifenpannen. Hierunter fallen starke, rasch auftretende Verluste des im Reifen herrschenden Überdrucks sowie Zerstörungen eines Reifens. Im Anschluß an eine solche Reifenpanne ist die Fortbewegung des Fahrzeuges praktisch nicht möglich. Es bedarf zur vollständigen Behebung des Defektes in der Regel eines Austausches des defekten Rades.

Es ist bekannt, eine Felge mit aufmontiertem Reifen (Reserverad) als Zubehör zum Fahrzeug vorzusehen, damit ein Fahrzeuglenker im Pannenfall auch ohne externe Hilfe den notwendigen Austausch vornehmen kann. Ein solches Reserverad befindet sich häufig im Kofferraum.

Um den Austausch im Pannenfall vornehmen zu können, bedarf es ferner der Mitführung von Werkzeug, wie einem Wagenheber und wenigstens einem Schraubenschlüssel.

Das Mitführen eines vollständigen Reserverades nebst Werkzeug erfordert die Bereitstellung von Raum innerhalb des Fahrzeuges, so zum Beispiel innerhalb des Kofferraumes. Ferner geht mit dem zusätzlichen Gewicht, welches aufgrund des Reserverades nebst Werkzeug transportiert werden muß, ein erhöhter Treibstoffverbrauch einher. Insgesamt werden hierdurch die Kosten gesteigert.

Ein herkömmliches Reserverad liegt in der Regel mehrere Jahre im Inneren eines Fahrzeuges und verliert währenddessen den ursprünglichen Reifendruck, ehe es zum Einsatz kommt. Die Fahrt muß in solchen Fällen somit mit einem Rad fortgesetzt werden, dessen Luftdruck erheblich unterhalb des für den Einsatz vorgesehenen Drucks vorliegt, soweit der Luftdruck nicht laufend korrigiert wird.

Infolge des herkömmlichen Reserverades wird also neben den zusätzlichen Investitionen verhältnismäßig viel Kraftstoff verbraucht und der ohnehin sehr begrenzt zur Verfügung stehende Raum in einem Fahrzeug weiter eingeschränkt. Darüber hinaus ist der Reifen in der Regel aufgrund langer Lagerungszeiten auf den Einsatzfall unzureichend vorbereitet.

Aus der deutschen Offenlegungsschrift 1 480 751 geht ein Notrad hervor, bei dem die Montage ohne Wagenheber durchgeführt werden kann. Das Notrad wird von außen auf eine Felge aufmontiert und umschließt den Umfang des luftgefüllten Reifens. Nachteilhaft werden bei diesem System die Kräfte über die Befestigungsschrauben abgeleitet. Die Fähigkeiten der Felge, die Radlast aufzunehmen, werden bei diesem System nicht genutzt.

Aus der Druckschrift WO 87/05866 geht ein weiteres Notlaufrad hervor, welches aus drei Teilen besteht. Zwei Halbräder werden auf eine Scheibe aufgeschraubt, die das dritte Teil der Notlaufeinrichtung darstellt.

Aus der Gebrauchsmusterschrift G 83 20 795.3U1 geht ein Notlaufrad hervor, dessen Lauffläche einen Durchmesser aufweist, der zwischen dem Durchmesser des Luftreifens und der Felge liegt. Dieses wird ergänzend zum eigentlichen Rad an diesem befestigt.

Alle vorgenannten drei Notlaufeinrichtungen, die ohne Radwechsel montiert werden, weisen den Nachteil auf, daß die Stabilitätseigenschaften der Felge ungenutzt bleiben. Entsprechend stabil müssen die Systeme gefertigt sein. Gewichtsprobleme sind die Folge. Kosten gehen hiermit einher.

Aus dem Stand der Technik ist alternativ ein schmales Notlaufrad mit Hochdruckreifen bekannt, mit dem die vorgenannten Probleme vermindert werden sollen. Ein solches Notlaufrad weist in der Regel einen Druck von 4,5 bar auf, der damit wesentlich oberhalb des Drucks von ca. 2 bar liegt, der für herkömmliche Reifen in der Regel eingestellt wird. Ein solches schmales Notlaufrad ist zwar etwas kleiner als das herkömmliche Reserverad, aber nur unwesentlich leichter und billiger. Das beim herkömmlichen Reserverad erforderliche Werkzeug wird beim schmalen Notlaufrad ebenfalls benötigt, um dieses im Pannenfall einsetzten zu können.

Alternativ ist dem Stand der Technik ein Reifen zu entnehmen, dessen Seitenwände im Vergleich zu herkömmlichen Reifen innen verstärkt sind. Aufgrund dieser Verstärkung ist im Fall eines Druckverlustes bei einem Reifen eine weitere Fortbewegung des Fahrzeuges zunächst möglich. Allerdings beschränkt sich diese Notlaufstrecke, mit anderen Worten die Strecke, die im Anschluß an einen starken Druckverlust im Reifen durchfahren wird, auf bis zu 200 km. Zwar kann der Transport von Werkzeug bei dieser Lösung eingespart werden. Allerdings weisen die Reifen ein erhöhtes Gewicht auf. Ferner sind Mehrkosten für jeden einzelnen Reifen unvermeidbar. Insbesondere die Nachteile in Bezug auf erhöhtes Reifengewicht und erhöhte Kosten haben dazu geführt, daß sich die Reifen mit der inneren Verstärkung nicht durchgesetzt haben.

Es ist bekannt, mechanische Abstützvorrichtungen im Felgenbett aus Gummi und Stahl vorzusehen, die bei starken Druckverlusten eines Reifens die Funktion des Rades übernehmen. Werkzeug wird bei dieser Lösung nicht benötigt, um im Pannenfall die Weiterfahrt fortsetzen zu können. Allerdings sind die Felgenlösungen deutlich schwerer und teurer als die üblicherweise eingesetzten Felgen, die keine mechanischen Abstützvorrichtungen aufweisen. Die mechanischen Belastungen des Reifens sind dann sehr groß. Auch können herkömmliche Reifen in der Regel auf Felgen mit mechanischen Abstützvorrichtungen aufgrund von Kompatibilitätsproblemen nicht aufgebracht werden. Der Einsatz eines solchen Systems auf breiter Basis würde also eine neue Rad - Reifen - Generation erfordern.

Aufgrund vorgenannter Probleme konnte sich das System mit den mechanischen Abstützvorrichtungen im Felgenbett nicht durchsetzen.

Im übrigen ist bekannt, undichte Stellen im Reifen durch eine plastische Masse abzudichten. Diese plastische Masse befindet sich zunächst in einer Spraydose, die unter hohem Druck steht. Dieses System erfordert weder einen relevanten erhöhten Raumbedarf, noch spielt das zusätzliche Gewicht eine Rolle. Nachteilhaft funktioniert das System nur bei bestimmten Defekten. Beispielsweise können Schäden an den Seitenwänden durch die plastische Masse nicht beseitigt werden und die Reifen sind anschließend nicht mehr zuverlässig verwendbar.

Aufgabe der Erfindung ist die Schaffung eines Notlaufsystems, welches leicht und klein ist, bei jeder Art von Reifenpanne eingesetzt werden kann und hohe Notlaufstrecken bei angemessener Geschwindigkeit zu bewältigen vermag.

Die Aufgabe der Erfindung wird durch eine Notlaufeinrichtung bzw. ein Notlaufsystem mit den Merkmalen des ersten Anspruchs gelöst. Vorteilhafte Ausgestaltungen ergeben sich aus den Unteransprüchen. Zur Lösung der Aufgabe tragen ferner die Gegenstände der Nebenansprüche bei.

Das Notlaufsystem mit den Merkmalen des ersten Anspruchs umfaßt ein radförmiges, kreisbogenförmiges oder kreisscheibenförmiges Element sowie Mittel, um das vorgenannte Element auf der Felge eines Rades eines Kraftfahrzeuges zu befestigen. Das Element kann ein- oder mehrstückig sein. Im Fall einer Panne wird das defekte Rad bzw. der defekte Reifen nicht gewechselt. Statt dessen wird das radförmige, kreisbogenförmige oder kreisscheibenförmige Element auf der Felge aufgesetzt und befestigt. Zumindest eine Nase ist vorgesehen, die so mit der Felge wechselwirkt, daß die in radialer Richtung wirkende Radlast sich von der Felge auf das kreisscheibenförmige oder radförmige, aufmontierte Element verlagert.

Das Element kann ein relativ kleines Volumen aufweisen und leicht sein.

Im Unterschied zum Stand der Technik mit dem schmalen Notlaufrad oder dem Ersatzrad findet jedoch kein Austausch eines defekten Rades gegen ein Notlauf- oder Ersatzrad statt. Statt dessen wird es lediglich auf der bereits vorhandenen Felge aufmontiert.

Da das erfindungsgemäße Notlaufsystem nicht den Austausch eines vollständigen Rades erfordert, sondern lediglich das bereits vorhandene Rad ergänzt, kann im Vergleich zum Notlaufrad mit Hochdruckreifen Gewicht, Volumen und Kosten eingespart werden. Der Reifen wird durch die anspruchsgemäße Einrichtung entlastet und die Radlast an die vorhandene Felge mittels der Nase oder der Nasen, die das Felgenhorn übergreifen, abgeleitet. Das anspruchsgemäße Notlaufsystem kann unabhängig vom Reifentyp eingesetzt werden. Eine Umstellung konventioneller Reifen auf das anspruchsgemäße System ist also nicht erforderlich. Das anspruchsgemäße Notlaufsystem ist unabhängig davon einsetzbar, ob Seitenwände eines Reifens vom Defekt betroffen sind oder nicht. Die Montage erfolgt in vergleichsweise kurzer Zeit, da die Felge nicht gewechselt werden muß. Das außen auf eine Felge aufmontierte kreisscheibenförmige, kreisbogenförmige oder radförmige Element verhindert bei einer Kurvenfahrt ferner das Abwerfen des Reifens. Wie nachfolgend erläutert wird, ist ferner eine Hebevorrichtung (Wagenheber) nicht zwingend für die Durchführung der Montage erforderlich.

In einer vorteilhaften Ausgestaltung der Erfindung ist das radförmige, kreisbogenförmige oder kreisscheibenförmige Element mehrteilig ausgestaltet. Bevorzugt besteht es aus zwei Teilen, die halbkreisförmig sind. Diese weisen insbesondere einen Abrollumfang auf, der bis zu 20 % kleiner als der Abrollumfang des luftgefüllten Reifens sein kann.

Im Fall einer Reifenpanne wird zunächst ein erstes Teil, also zum Beispiel das erste halbkreisförmige Element so an der Felge von außen (d.h., auf der vom Fahrzeug abgewandten Seite) befestigt, daß es zunächst keine Radlast abstützt. Es ist in dieser Position jedoch grundsätzlich in der Lage, die Radlast abzustützen. Nach dieser Montage weist das Teil also (praktisch) keinen Bodenkontakt auf. Nach der Montage des ersten Teils, also insbesondere der ersten Hälfte, wird das defekte Rad so gedreht, daß das befestigte erste Teil die Radlast übernimmt. Dieses Drehen des Reifens kann problemlos erfolgen, indem das Fahrzeug entsprechend verschoben beziehungsweise das Rad gerollt wird. Hierfür muß es in der Regel schätzungsweise um einen Meter vor- oder zurückgerollt werden. Anschließend werden die weiteren Teile auf der Felge montiert, also insbesondere die zweite Hälfte des kreisscheibenförmigen, kreisbogenförmigen oder radförmigen Elementes.

Bei dieser Ausgestaltung der Erfindung ist es nicht erforderlich, den Wagen vor der Montage durch einen Wagenheber anzuheben. Der Einsatz eines Wagenhebers kann somit eingespart werden. Volumen, Gewicht und damit Kosten werden folglich reduziert.

Alternativ zur zweigeteilten Lösung kann ein einteiliges kreisscheibenförmiges oder radförmiges Element auch zunächst schräg an einer Felge von außen angesetzt werden. Danach werden beispielsweise erste Schrauben, die der Befestigung des Elementes an der Felge dienen, zum Beispiel mit Hilfe eines Radschlüssels angezogen. Durch Hin- und Herrollen des Fahrzeuges und einem parallel hierzu erfolgenden Anziehen der Schrauben kann auch ein einteiliges radförmiges oder kreisscheibenförmiges Element ohne Einsatz eines Wagenhebers montiert werden. Das Vorsehen mehrerer Teile zur Vermeidung eines Wagenhebers funktioniert jedoch einfacher und zuverlässiger.

Beim anspruchsgemäßen Notlaufsystem werden bei einer anschließenden Fortsetzung einer Fahrt weitergehende Beschädigungen des Reifens sicher vermieden, da die Wulste der Seitenwände nicht mehr verformt werden. Andererseits wirkt auf die Reifenlauffläche des defekten Reifens die Zentrifugalkraft ein, so daß während der Weiterfahrt ein Kontakt zur Fahrbahn vorhanden ist. Der defekte Reifen vermag, je nach Art des Defektes, also noch zur Haftung des Fahrzeuges am Boden beizutragen. Auch in dieser Hinsicht ist das anspruchsgemäße Notlaufsystem der Lösung mit dem schmalen Notlaufrad mit Hochdruckreifen überlegen. Die anspruchsgemäße Lösung ist ferner insbesondere den Lösungen mit Stützringen im Felgenblatt überlegen. Die Gewebeschäden in der Festigkeitsstruktur des Reifens werden erfindungsgemäß vermieden. Aufgrund das Vorsehen der Nase werden Stabilitätseigenschaften der Felge genutzt, so daß die Lösung auch den Systemen überlegen ist, die das Montieren einer Notlaufeinrichtung ohne Radwechsel vorsehen.

Das radförmige, kreisbogenförmige oder kreisscheibenförmige Element kann aus Leichtmetall, Stahl oder faserverstärkten Kunststoffen bestehen. Bei Vorsehen dieser Materialien kann das Element sehr leicht und flach konstruiert werden. Druckverluste, die aufgrund langer Lagerung bei einem konventionellen Reserverad problematisch sind, können hier nicht auftreten.

Die Befestigung erfolgt form- und/oder kraftschlüssig. Beispielsweise weist das kreisscheibenförmige oder radförmige Element eine kreisförmige, hervorstehende Nase auf, die mit dem äußeren Horn einer Felge im Einsatzfall so zusammenwirkt, daß die Radlast von der Felge bzw. dem Felgenhorn über die Nase auf das kreisscheibenförmige oder radförmige Element übertragen wird. Der innere Durchmesser dieser ringförmig hervorstehenden Nase korrespondiert vorzugsweise mit dem äußeren Durchmesser, der von dem außenliegenden Horn der Felge gebildet wird. Die Nase stellt dann ein Negativprofil dar.

Eine solche Nase kann über das Felgenhorn greifen. Bei einem mehrteiligen Element ist die Montage besonders einfach, auch wenn die Nase aufgrund einer leicht gebogenen Form (von außen gesehen) bis hinter das Felgenhorn gelangt.

Um laterale Kräfte, die also senkrecht zu den radialen Kräften wirken, über die Felge abzuleiten, greift die Nase so über das Felgenhorn, daß eine formschlüssige Verbindung hergestellt ist. Weitere Nasen oder Zapfen, die in korrespondierende Löcher in der Felge eingreifen, verstärken den Effekt.

Der innere Durchmesser von umlaufend angeordneten Nasen sind in einer Ausgestaltung geringfügig größer als der äußere Durchmesser der Felge. Dann kann das kreisscheibenförmige, kreisbogenförmige oder radförmige Element so auf der Felge montiert werden, daß das außenliegende Horn der Felge in das Innere der kreisförmigen Nase ein Stück hineingeschoben werden kann. Die endgültige Befestigung des kreisscheiben-, kreisbogen- oder radförmigen Elementes kann dann kraftschlüssig beispielsweise durch Schrauben oder Klemmen erfolgen, die von außen auf die Felge, insbesondere auf die Felgenschlüssel, aufgeschraubt oder angebracht werden. Hierfür können entsprechend angeordnete Löcher in dem kreisscheibenförmigen Element bzw. radförmigen Element sowie Gewinde in der Felge vorgesehen werden. Insgesamt liegt so eine zuverlässige Befestigung vor, bei der die Radlast nicht durch die Verschraubung von der Felge auf das kreisscheibenförmige, kreisbogenförmige oder radförmige Element übertragen wird. Diese bevorzugte Ausführungsform mit der Nase funktioniert daher besonders sicher und zuverlässig.

Das vorgenannte Gewinde kann sich alternativ in dem Radträger befinden, um das kreisscheibenförmige, kreisbogenförmige oder radförmige Element festzuschrauben. In diesem Fall wird die Felge Löcher aufweisen, die die Verbindung zu den Gewinden herstellen. Schrauben zur Befestigung des kreisscheibenförmigen oder radförmigen Elementes werden dann durch die Löcher hindurch geschoben. Die Position der Löcher in dem kreisscheibenförmigen oder radförmigen Element sowie in der Felge sind also auf die Positionen der Gewinde in der Radträger abgestimmt.

Es bedarf bei dieser Ausgestaltung der Erfindung einer Anpassung vorbestehender Radträgern und/oder vorbestehender Felgen auf das anspruchsgemäße kreisscheibenförmige oder radförmige Element. Die Erfindung umfaßt daher neben dem kreisscheibenförmigen, kreisbogenförmigen oder radförmigen Element einen auf dieses Element abgestimmten Radträger und / oder eine auf dieses Element abgestimmte Felge. Der Radträger bzw. die Felge sind so beschaffen, daß das kreisscheibenförmige, kreisbogenförmige oder radförmige Element von außen auf der Felge befestigt werden kann.

In einer vorteilhaften Ausgestaltung der Erfindung ist der äußere Rand des kreisscheibenförmigen oder radförmigen Elementes so ausgelegt, daß er bei Fahrbahnunebenheiten selbstfedernd reagiert. Die federnde Eigenschaft wird durch eine bogenförmige Ausgestaltung aus radialer in lateraler Richtung insbesondere bei Kunststoff- oder Stahlbauweise möglich.

Durch die selbstfedernde Ausgestaltung des Elementes wird der Fahrkomfort erhöht. Stöße werden abgefedert, so daß Folgeschäden aufgrund der Stöße vermieden werden.

Der Rand des anspruchsgemäßen Elementes ist vorteilhaft mit einer Schicht belegt, die aus Polymermaterial besteht. Hierdurch wird erreicht, daß der betriebsbedingte Abrieb auf die elastische Schicht beschränkt bleibt. Ferner wird ein Reibschluß erzeugt.

Beim Stand der Technik mit der inneren Verstärkung von Seitenwänden eines Reifens oder der mechanischen Abstützvorrichtung in dem Felgenbett für einen drucklosen Reifen werden die Reifen bei der Weiterfahrt stark belastet und zunehmend geschädigt. Beim erfindungsgemäßen Notlaufsystem wird der defekte Reifen trotz Rollenkontakt weitgehend entlastet und bleibt damit frei von Folgeschäden, so daß der Reifen auch nach hunderten von Notlaufkilometern nicht über das Maß beschädigt wird, welches ursächlich zum Druckverlust geführt hatte. Es können Reichweiten erzielt werden, die erheblich über den eingangs genannten 200 Kilometern liegen.

In einer weiteren Ausgestaltung der Erfindung ist der Durchmesser des kreisscheibenförmigen, kreisbogenförmigen oder radförmigen Elementes so auf den Durchmesser des verwendeten Reifens abgestimmt, daß sich der drucklose Reifen im montierten Zustand des kreisscheibenförmigen radförmigen Elementes zwar elastisch zur Radinnenseite verformt, jedoch nur so, daß seine empfindlichen Wulstverstärkungen nicht zur Abstützung der Radlasten beitragen müssen.

Es wurde festgestellt, daß im Notlauf die geringste Reifenbelastung erreicht wird, wenn der äußere Radius des anspruchsgemäßen Elementes bis unterhalb der Reifenschultern reicht.

Ist der Durchmesser des anspruchsgemäßen Elementes in der vorgenannten Weise auf den Durchmesser des Reifens abgestimmt, so rollt der drucklose Reifen mit seinem Laufstreifen, also mit seiner Lauffläche schlaff auf der Fahrbahnoberfläche innerhalb der vom Reifenhersteller zugelassenen Verformungen mit. Der drucklose Reifen kann dann bei eingeschränkten Geschwindigkeiten zusätzlich Reibkräfte zur Verfügung stellen, ohne daß der drucklose Reifen weiter geschädigt wird. Insbesondere wirken diese Reibkräfte bei einem Rad, welches auf der Innenseite einer Kurve angeordnet ist. Der drucklose Reifen wird dann von dem seitlich anliegenden Segment des anspruchsgemäßen Elementes so zur Radinnenseite verschoben, daß die dort befindliche Seitenwand des Reifens seitlich abgestützt auch bei einer Kurvenfahrt keine relativen Bewegungen ausführen kann.

Diese Verbesserung im Pannenfall wird durch eine angemessene Inanspruchnahme des mechanischen Traganteils innerhalb der konstruktiv zulässigen elastischen Verformbarkeit der Festigkeitsstruktur des Reifens möglich, da nun die vertikalen Kräfte weitgehend von den formsteifen Segmenten eines Reifens übernommen werden.

Durch die anspruchsgemäße Felge ist es möglich, die Lasten während des Fahrbetriebs von der Notlaufeinrichtung auf die Felge zu übertragen. Die Felge ist also erfindungsfunktionell individualisiert und so vor allem an das Zusammenwirken mit Nasen oder Zapfen angepaßt.

Um die Notlaufeinrichtung an dem Radträger zu befestigen ist es zweckmäßig, entsprechend im Element plazierte Bohrungen mit einem Durchmesser zu wählen, der größer ist als ein Durchmesser eines Schraubenkopfes, mittels dem die Felge auf dem Radträger befestigt ist. Das Element wird dann mit Schrauben an dem Radträger befestigt, die einen Kopf mit einem Durchmesser aufweisen, der den der vorgenannten Bohrungen übersteigt. Es ist dann möglich, zunächst einige der Schrauben zu lösen, mit denen die Felge auf dem Radträger befestigt ist. Anschließend wird das Element mit einigen Schrauben mit den großen Köpfen an den frei gewordenen Positionen befestigt. Nun können die restlichen Schrauben mit den kleinen Kopfdurchmessern durch die Schrauben mit den großen Kopfdurchmessern ersetzt werden.

Diese Variante weist den Vorteil auf, daß keine besonderen Bohrungen in der Felge oder im Radträger vorgesehen sein müssen.

Es zeigen
- Figur 1:: Erster Ausschnitt eines Querschnittes durch ein Notlaufsystem;
- Figur 2:: Zweiter Ausschnitt eines Querschnittes durch ein Notlaufsystem;
- Figur 3:: Notlaufsystem, bei dem das kreisscheibenförmige oder radförmige Element zweigeteilt ist.

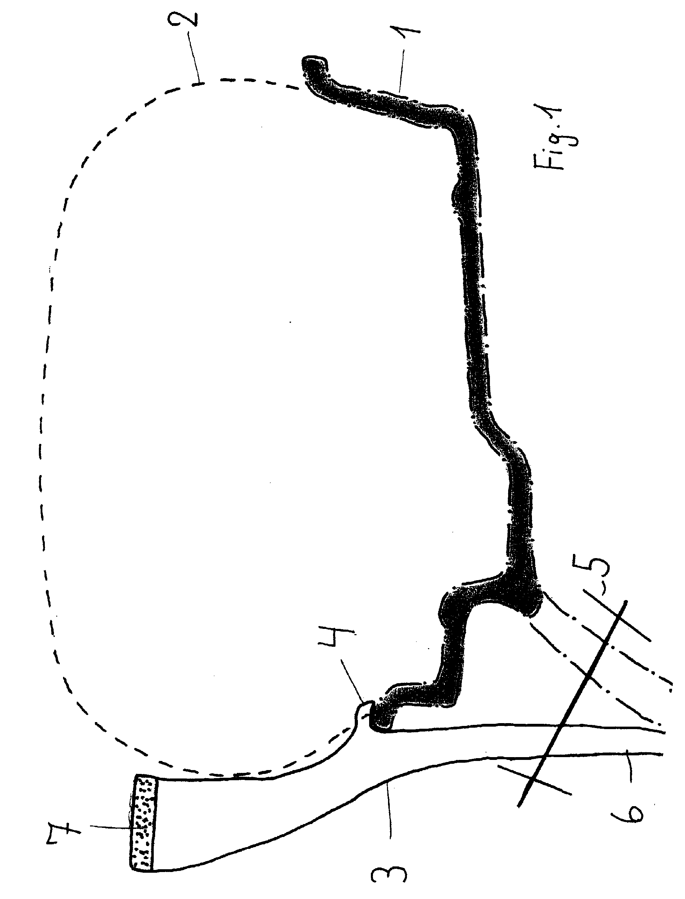

In Figur 1 wird ein Ausschnitt aus einem Querschnitt des anspruchsgemäßen Notlaufsystems gezeigt. Auf einer Felge 1 ist ein Reifen 2 montiert. Bei der Felge 1 handelt es sich um eine sogenannte Hochhornfelge. Hierunter ist eine Felge zu verstehen, bei der das eine Horn der Felge höher ist als das andere Horn der Felge. Auf die Außenseite dieser Felge ist ein kreisscheibenförmiges oder radförmiges Element 3 befestigt. Das Element 3 weist eine Nase 4 auf, die über das angrenzende Horn der Felge 1 geschoben ist. Mittels der Nase 4 werden die vertikalen Kräfte von der Felge auf das kreisscheibenförmige bzw. radförmige Element übertragen. Das System umfaßt einen Schnellverschluß 5, mit dem das Element 3 an der Felge 1 befestigt wird. Es handelt sich insbesondere um Schraub- oder Klemmverschlüsse.

Dabei dient der auf der Felgenschüssel aufliegende innere Rand als Spannlager. Insgesamt werden so die auf den Laufstreifen 7 wirkenden Kräfte sicher abgestützt. Der äußere Rand des kreisscheibenförmigen oder radförmigen Elementes 3 so ausgelegt, daß er bei Fahrbahnunebenheiten selbstfedernd reagiert. Die federnde Eigenschaft wird durch die leichte bogenförmige Ausgestaltung aus radialer in lateraler Richtung insbesondere bei Kunststoff- oder Stahlbauweise möglich.

Durch die selbstfedernde Ausgestaltung des Elementes 3 wird der Fahrkomfort erhöht. Stöße werden abgefedert, so daß Folgeschäden aufgrund der Stöße vermieden werden.

Der Rand des Elementes 3 ist mit einer Schicht 7 belegt, die aus Polymermaterial besteht und den Laufstreifen bildet. Hierdurch wird erreicht, daß der betriebsbedingte Abrieb auf die Schicht 7 beschränkt bleibt. Ferner wird ein Reibschluß erzeugt.

Im übrigen ist das Element 3 im wesentlichen aus Metall oder verstärktem Kunststoff gefertigt.

Figur 1 verdeutlicht den Zustand eines drucklosen Reifens auf der Oberseite, das heißt auf der von der Fahrbahn entfernten Seite. In diesem Zustand überragt der Reifen 2 das kreisscheibenförmige oder radförmige Element 3 so, daß er beim Aufsetzen auf die Fahrbahn einerseits einen Reibkontakt herzustellen vermag und er andererseits nicht in einer Art und Weise belastet und verformt wird, die die Festigkeit des Reifens schädigt.

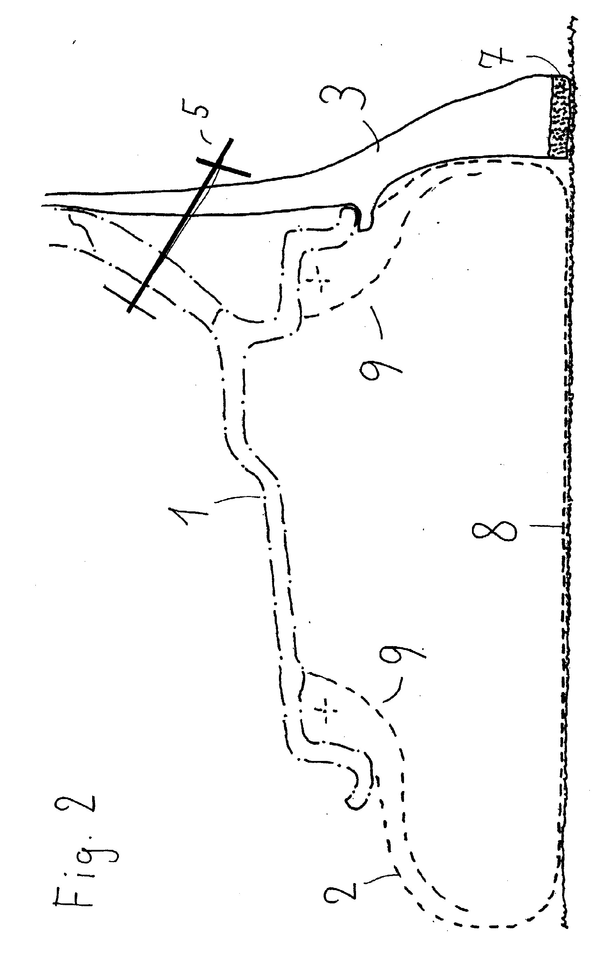

Figur 2 verdeutlicht den Zustand des in Figur 1 gezeigten drucklosen Reifens, wenn dieser auf der Fahrbahn aufsetzt. Die Traglast wird im Wesentlichen durch das Element 3 übernommen. In dem in Figur 2 gezeigten Zustand rollt der drucklose Reifen mit seinem Laufstreifen 8 auf der Fahrbahnoberfläche innerhalb der vom Konstrukteur zugelassenen Verformungen mit. Aufgrund der Abstimmung der Durchmesser von Reifen und kreisscheibenförmigem Element werden die empfindlichen Wulstverstärkungen 9 nicht in unzulässiger Weise belastet.

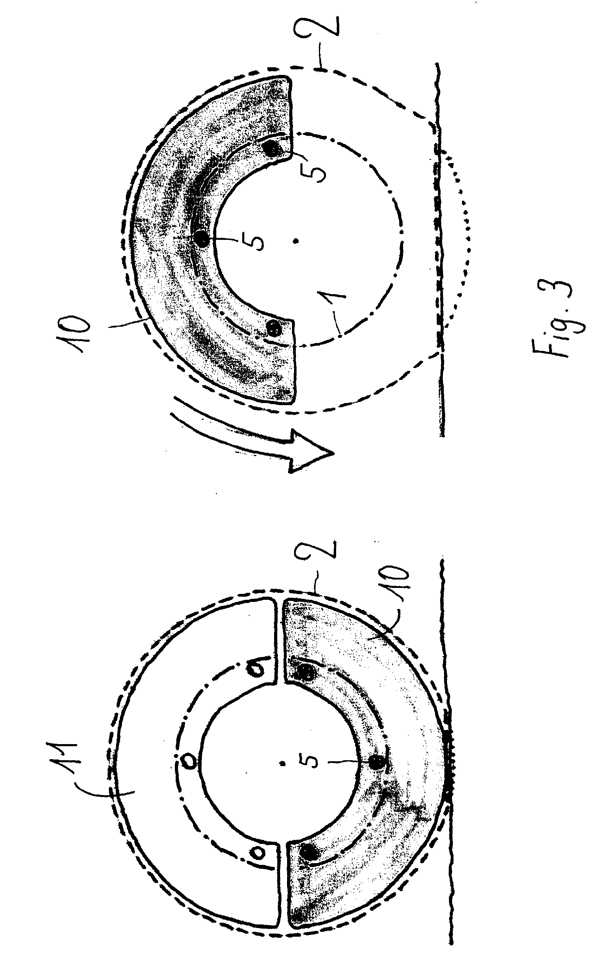

Figur 3 zeigt eine Aufsicht von außen auf das Notlaufsystem. Das kreisscheibenförmige Element 3 besteht aus zwei Teilen 10 und 11. Zunächst wird Teil 10 so befestigt, daß kein Kontakt mit der Fahrbahn besteht. Nach der Befestigung wird das Fahrzeug ein kurze Strecke gerollt, so daß die Hälfte 10 auf der Fahrbahn aufsetzt und den Reifen entlastet. Anschließend wird die zweite Hälfte 11 montiert.

Bei dieser Lösung wird ein Wagenheber unproblematisch eingespart.

## Patentansprüche

1. Notlaufeinrichtung für ein Fahrzeug mit einem radförmigen, kreisbogenförmigen oder kreisscheibenförmigen Element (3) sowie Mitteln, um das Element auf der Felge eines Rades eines Fahrzeuges zu befestigen, gekennzeichnet durch ein oder mehrere Nasen (4) oder Zapfen, über welche die Radlasten auf die Felge (1) abgeleitet werden.

2. Notlaufeinrichtung nach Anspruch 1, bei dem das radförmige, kreisbogenförmige oder kreisscheibenförmige Element (3) aus mehreren Teilen, insbesondere aus zwei halbkreisförmigen Elementen (10, 11) besteht.

3. Notlaufeinrichtung nach Anspruch 1 oder 2 mit einer umlaufenden, hervorstehenden Nase (4) auf dem radförmigen, kreisbogenförmigen oder kreisscheibenförmigen Element für die Aufnahme der Lasten eines Rades.

4. Notlaufeinrichtung nach einem der vorhergehenden Ansprüche, bei der das radförmige, kreisbogenförmige oder kreisscheibenförmige Element (3) auf einer Felge aufgebracht ist (1).

5. Notlaufeinrichtung nach einem der vorhergehenden Ansprüche, bei dem das radförmige, kreisbogenförmige oder kreisscheibenförmige Element (3) aus Leichtmetall, Stahl oder faserverstärktem Kunststoff besteht.

6. Notlaufeinrichtung nach einem der vorhergehenden Ansprüche, bei der das radförmige, kreisbogenförmige oder kreisscheibenförmige Element (3) selbstfedernd ausgestaltet ist.

7. Notlaufeinrichtung nach einem der vorhergehenden Ansprüche, bei der der äußere Rand mit Polymermaterial (7) beschichtet ist.

8. Notlaufeinrichtung nach einem der vorhergehenden Ansprüche umfassend eine Felge mit Reifen, bei der der Durchmesser des radförmigen, kreisbogenförmigen oder kreisscheibenförmigen Elementes den äußeren Durchmesser des Reifens unterschreitet und den äußeren Durchmesser der Felge überschreitet, wobei der Abrollumfang des Elementes den Abrollumfang des luftgefüllten Reifens insbesondere um 2% bis 30 %, insbesondere bis 20 % unterschreitet.

9. Notlaufeinrichtung nach einem der vorhergehenden Ansprüche, bei der die Nase oder Nasen über das Felgenhorn formschlüssig übergreifen.

10. Notlaufeinrichtung nach einem der vorhergehenden Ansprüche, bei der die Nase wenigstens einen Zapfen aufweist, der in eine Bohrung oder Schlitz im Felgenhorn so eingreift, daß laterale Kräfte auf die Felge abgeleitet werden.

11. Notlaufeinrichtung nach einem der vorhergehenden Ansprüche, bei der Zapfen vorgesehen sind, die in Öffnungen in der Felgenschüssel oder im Felgenstern so eingreifen, daß Umfangskräfte an die Felge abgeleitet werden.

12. Felge für ein Fahrzeug, die so ausgestaltet ist, daß ein radförmiges, kreisbogenförmiges oder kreisscheibenförmiges Element (3) nach einem der vorhergehenden Ansprüche auf der Felge (1) befestigt werden kann.

13. Felge für ein Fahrzeug Felge für ein Fahrzeug nach Anspruch 12, gekennzeichnet durch Löcher, Schlitze oder Bohrungen, die so mit den Nasen oder Zapfen zusammenwirken, daß das radförmige, kreisbogenförmige oder kreisscheibenförmige Element (3) auf die Felge aufgesetzt werden kann, so daß Radlasten von dem Element auf die Felge übertragbar sind.
